(19) Europäisches Patentamt
European Patent Office
Office européen des brevets

(11) Veröffentlichungsnummer: **0 313 755**
**A2**

# (12) EUROPÄISCHE PATENTANMELDUNG

(21) Anmeldenummer: **88113820.0**

(51) Int. Cl.$^4$: **B01J 23/30 , B01D 53/36**

(22) Anmeldetag: **25.08.88**

(30) Priorität: **28.10.87 DE 3736478**

(43) Veröffentlichungstag der Anmeldung:
**03.05.89 Patentblatt 89/18**

(84) Benannte Vertragsstaaten:
**BE DE FR GB**

(71) Anmelder: **HÜLS AKTIENGESELLSCHAFT**
**Patentabteilung / PB 15 - Postfach 13 20**
**D-4370 Marl 1(DE)**

(72) Erfinder: **Kaizik, Alfred, Dr.**
**Bitterfelder Strasse 8**
**D-4370 Marl(DE)**
Erfinder: **Immendorf, Franz-Josef**
**Schlingweg 42**
**D-4353 Der-Erkenschwick(DE)**
Erfinder: **Hög, Hans-Ulrich, Dr.**
**Leverkusener Strasse 8**
**D-4370 Marl(DE)**
Erfinder: **Nowitzki, Bernd, Dr.**
**Bitterfelder Strasse 9 a**
**D-4370 Marl(DE)**

## (54) Verfahren zur Herstellung eines gegen Arsenvergiftung resistenten Katalysators zur Entfernung von Stickoxiden aus Abgasen.

(57) Katalysatoren zur Entfernung von Stickoxiden aus Abgasen, insbesondere aus Rauchgasen, auf Basis Titandioxid mit Molybdäntrioxid, Wolframtrioxid und Vanadinpentoxid als weiteren katalytisch aktiven Komponenten sind bekannt. Allerdings erleiden sie beim Kontakt mit Arsenverbindungen eine rasche Desaktivierung. Das neue Herstellungsverfahren soll nun gegen Arsenvergiftung resistente Katalysatoren zugänglich machen.

Durch eine zusätzliche Imprägnierung von Katalysatoren auf Basis Titanoxid gemäß dem Stand der Technik mit einer gelösten Molybdän-und/oder Wolframverbindung und gegebenenfalls Vanadinverbindung werden Katalysatoren mit einer ausgezeichneten Resistenz gegen Arsenvergiftung erhalten.

Verwendung von gegen Arsenvergiftung resistenten Katalysatoren zur Entfernung von Stickoxiden aus Abgasen.

EP 0 313 755 A2

Xerox Copy Centre

# Verfahren zur Herstellung eines gegen Arsenvergiftung resistenten Katalysators zur Entfernung von Stickoxiden aus Abgasen

Die Erfindung betrifft ein Verfahren zur Herstellung eines gegen Arsenvergiftung resistenten Katalysators zur Entfernung von Stickoxiden aus Abgasen auf Basis Titanoxid, der gegebenenfalls noch weitere katalytisch aktive Komponenten und/oder Bindemittel enthält.

Die derzeit wichtigste, im großtechnischen Maßstab genutzte Methode zur Minderung des Stickoxidausstoßes von Feuerungsanlagen ist die selektive katalytische Reduktion von Stickoxiden mit Ammoniak, wobei überwiegend Katalysatoren auf Basis von Titandioxid eingesetzt werden. Dieses Verfahren wurde ursprünglich für gas- oder ölbefeuerte Anlagen und für Kohlefeuerungen mit trockenem Ascheabzug entwickelt. Bei der Übertragung auf Schmelzkammerfeuerungen, insbesondere solche mit Ascherückführung, trat das Problem in Erscheinung, daß Spuren von Arsenverbindungen in der Kohle sich im Rauchgas zu einer solchen stationären Konzentration anreichern, daß die Katalysatoren eine rasche Desaktivierung erleiden (Energie Spektrum November 1986, S. 16). Bisher müssen so geschädigte Katalysatoren durch frische ersetzt werden.

Wesentlich günstiger wäre es, über Katalysatoren zu verfügen, die durch den Kontakt mit Arsenverbindungen nicht oder nur in geringem Maße desaktiviert werden. Solche Katalysatoren sind bislang unbekannt.

Somit liegt der Erfindung die Aufgabe zugrunde, einen Katalysator auf Basis Titanoxid zur Entfernung von Stickoxiden aus Abgasen, insbesondere aus Rauchgasen, zu entwickeln, der gegen eine Arsenvergiftung resistent ist, d. h. der durch den Kontakt mit Arsenverbindungen nicht oder nur in geringem Maße desaktiviert wird.

Diese Aufgabe wird erfindungsgemäß dadurch gelöst, daß man den Katalysator nach Formung und Calcinierung zusätzlich mit einer gelösten Mo lybdän- und/oder Wolframverbindung und ggf. Vanadinverbindung imprägniert.

Überraschenderweise ist bei Untersuchungen zur Vergiftungsproblematik gefunden worden, daß auf Titanoxid basierende Katalysatoren erheblich widerstandsfähiger gegenüber einer Desaktivierung durch Arsen, das unter Feuerungsbedingungen überwiegend als Arsen-III-oxid vorliegt, werden, wenn man sie nach Formung und Calcinierung einer Imprägnierung mit einer gelösten Molybdän- und/oder Wolframverbindung und ggf. Vanadinverbindung unterzieht. Die Imprägnierung erfolgt vorzugsweise durch Tauchen, aber auch andere Verfahren, wie z. B. Sprühen, können angewandt werden. Der Erfolg dieser Maßnahme ist deshalb besonders überraschend, weil bei den seit längerem bekannten, nach dem Stand der Technik hergestellten, wolfram- und/oder molybdänhaltigen und/oder vanadinhaltigen Katalysatoren auf Basis von Titanoxid, wie sie beispielsweise die DE-PS 24 58 888 und die DE-OS 34 38 367 beschreiben, diese Eigenschaft bisher nicht festgestellt wurde.

Das erfindungsgemäße Verfahren ist anwendbar auf beliebige äußere Katalysatorformen, wie Tabletten, Pellets, Ringe, Strangpreßlinge, Platten oder Waben, die in an sich bekannter Weise durch Kalandrieren, Aufwalzen, Beschichten, Pellettieren, Tablettieren, Pressen oder Extrudieren hergestellt und nach der Formung einer Calcinierung unterzogen werden und die entweder in ihrem gesamten Volumen oder in den für die katalytische Reaktion genutzten Teilen Titanoxid als Hauptkomponente enthalten. Unter dem Begriff "Hauptkomponente" ist ein höherer Gewichtsanteil als für jede andere, katalytisch aktive Einzelkomponente zu verstehen.

Vorzugsweise liegt die Hauptkomponente als Titandioxid ganz oder überwiegend in nicht durchkristallisierter Anatasform vor. Die Katalysatoren können ausschließlich aus Titanoxid als katalytisch aktiver Komponente bestehen oder weitere katalytisch aktive Komponenten, wie vorzugsweise Molybdän- und/oder Wolframverbindungen und/oder Vanadinverbindungen enthalten. Hierbei können die weiteren katalytisch aktiven Komponenten u. a. in Form ihrer Oxide und/oder Sulfate vorliegen. Als Oxide haben sie besondere technische Bedeutung erlangt. Vorteilhaft ist eine möglichst feine Verteilung dieser weiteren Komponenten in der Katalysatormasse, wie sie sich durch Adsorption an Titanoxid oder durch Kofällung oder Mischen, Kneten oder Vermahlen, vorzugsweise in feuchtem Zustand, mit Titanoxid oder geeigneten Vorstufen erzielen läßt. Exemplarisch sei hierzu auf die DE-PS 24 58 888 verwiesen.

Neben Titanoxid können die Katalysatoren noch weitere anorganische Bestandteile, wie Silicium-, Zirkon-, Aluminiumoxid, Alumosilikate, Tone u. a. m. enthalten. Diese weiteren Komponenten, die selbst nicht oder nur in geringerem Maße katalytisch aktiv sind, können durch Kofällung im Herstellungsgang des Titanoxids eingebracht oder an geeigneter Stelle, beispielsweise vor dem Verformungsschritt, als Pulver, Sole oder Gele, zugemischt werden. Mit ihrer Hilfe werden die Verarbeitungseigenschaften in der Formgebung und vor allem bei Einsatz der als Binder wirkenden Sole oder Gele die Festigkeitswerte der geformten Körper verbessert. Gegebenenfalls werden auch katalytische Eigenschaften stabilisiert oder verstärkt.

Der Verbesserung der mechanischen Festigkeit dienen außerdem Zusätze von Fasermaterialien, beispielsweise von Glas-, Keramik-, Kohlenstoff-und/oder hinreichend temperaturstabilen organischen Fasern.

Noch aus dem Herstellungsgang des Titanoxids oder später zugesetzt, können die Katalysatoren Sulfat, gegebenenfalls zum Teil in Form von Bariumsulfat, enthalten.

Das erfindungsgemäße Verfahren beschränkt sich weder auf eine bestimmte Art der Herstellung des katalytisch aktiven Titanoxids oder seiner Gemische mit weiteren katalytisch aktiven Komponenten noch auf eine bestimmte Art der Weiterverarbeitung zu geformten Katalysatoren.

Für den technischen Prozeß geht man vorzugsweise von einer Metatitansäure-Suspension aus, wie sie beim Sulfatverfahren der Titandioxid- Herstellung als Zwischenprodukt anfällt. Dieses Ausgangsmaterial enthält noch ca. 6 bis 10 Gew.-% Schwefelsäure, bezogen auf Titandioxid, die entweder im Material verbleibt oder durch basische Wäsche teilweise oder auch weitestgehend entfernt oder durch Zugabe eines Bariumsalzes in das schwerlösliche Bariumsulfat überführt wird. Bei Bedarf können die oben erwähnten weiteren katalytisch aktiven Komponenten und/oder sonstigen anorganischen Bestandteile schon bei der Herstellung der Metatitansäure-Suspension eingearbeitet oder zur Suspension zugesetzt werden.

Die Metatitansäure wird, ggf. nach Filtration, vorzugsweise im Temperaturbereich von 100 bis 200 °C getrocknet. Die Trocknung kann, ohne Einschränkung auf ein bestimmtes Verfahren, beispielsweise auf Horden, im Schaufeltrockner, im Drehrohr oder mittels Sprühtrockner, erfolgen. Eine anschließende Calcinierung wird bei 300 bis 800 °C, vorzugsweise bei 400 bis 600 °C, beispielsweise auf Horden, im Wirbelbett oder im Drehrohr, durchgeführt. Die Dauer der Calcinierung beträgt typischerweise zwischen 0,5 und 12 Stunden, im Vorzugsbereich der Temperatur zwischen 2 und 8 Stunden.

Vor oder nach dem Calcinieren kann eine Zugabe von oder eine Behandlung mit einer Säure, z. B. Salpeter-, Schwefel-, Essig- oder Oxalsäure, erfolgen, um Härte und Zusammenhalt des Materials zu verbessern. Im allgemeinen ist es erforderlich, das calcinierte Material vor der Weiterverarbeitung aufzumahlen.

Anschließend wird das Pulver mit Verarbeitungshilfsmitteln, wie Wasser, höheren Alkoholen, Methylcellulosen, Polyalkylenoxiden, Ölen, Wachsen u. a. m. vermischt oder geknetet. Weitere Bestandteile wie weitere katalytisch aktive Komponenten, Fasern und sonstige anorganische Komponenten können auch an dieser Stelle zugesetzt werden. Die Zugabe eines Sols oder Gels, z. B. der Kieselsäure oder des Titanoxids selbst als Bindemittel verbessern die Festigkeit des Endprodukts. Zusätzliche weitere katalytisch aktive Komponenten werden vorteilhaft in gelöster Form eingebracht, beispielsweise als konzentrierte wäßrige Lösungen von Vanadyloxalat, Ammoniummetavanadat, Ammoniummetawolframat oder Ammoniumdi- oder -heptamolybdat.

Das Material wird danach verformt. Die ausgeformten Körper werden bei Raumtemperatur bis hinauf zu Temperaturen von ca. 200 °C getrocknet und üblicherweise bei Temperaturen bis 650 °C calciniert.

Technische Bedeutung bei der Stickoxidminderung in Feuerungsanlagen haben insbesondere Katalysatoren in Waben- oder Plattenform erlangt. Die weitere Beschreibung erfolgt daher am Beispiel von Wabenkatalysatoren, ohne jedoch hierauf beschränkt zu sein. Das Verfahren ist ohne weiteres auf alle übrigen Formen übertragbar. Aus Abb. 1 ist zu ersehen, daß die Katalysatoren K1 bis K3 nach dem Stand der Technik, die sich auch im großtechnischen Einsatz befinden, im Kontakt mit arsenhaltigem Gas ohne Ausnahme stark desaktiviert werden. Abb. 1 zeigt aber auch, daß sich das Ausmaß der Desaktivierung bei einem Katalysator, der nach dem erfindungsgemäßen Verfahren hergestellt worden ist, drastisch vermindert.

Imprägniert werden geformte und calcinierte Katalysatoren. Diese können aus Titanoxid als katalytisch aktiver Komponente allein bestehen oder schon weitere katalytisch aktive Komponenten, beispielsweise Vanadium-, Molybdän-, Wolframverbindungen, vorzugsweise Oxide, u. a. enthalten. Die Imprägnierung kann entweder in einem Schritt mit einer Lösung einer Molybdän- und/oder Wolframverbindung und gegebenenfalls Vanadinverbindung oder nacheinander mit einer Lösung einer Molybdänverbindung und/oder einer Lösung einer Wolframverbindung und gegebenenfalls einer Lösung einer Vanadinverbindung erfolgen.

Vorzugsweise geschieht die Imprägnierung durch Tauchen in der entsprechenden Lösung bzw. in den entsprechenden Lösungen oder einer passenden Vorstufe mit definierter Konzentration, die sich aus dem angestrebten Gehalt der Molybdän- und/oder Wolframverbindung und ggf. Vanadinverbindung im Katalysator ergibt. Dieser Gehalt wird auch von der Dauer des Tauchens beeinflußt. Zweckmäßige Tauchzeiten betragen 0,5 bis 30 Minuten, wobei die Dauer des Eintauchvorganges so kurz wie möglich zu halten ist, d. h. nur wenige Sekunden betragen darf, wenn eine gleichmäßige Belegung erzielt werden soll. Die aus dem Flüssigkeitsaufnahmevermögen des unbehandelten Katalysators und der Konzentration der Imprägnierlösung zu errechnende Konzentration im Kataly sator stellt sich im allgemeinen bei Tauchzeiten von rund einer Minute oder kürzer ein. Längere Tauchzeiten führen generell zu höheren Konzentrationen im Katalysator als der errechneten, z. B. bei Ammoniumheptamolybdat-Lösung statt errechneter 7,5 Gew.-% $MoO_3$ nach fünfminütiger Tauchung 10,4 Gew.-%. Es kann auch bei kurzen Tauchzeiten zweckmäßig sein,

eine Abweichung der Konzentration im fertigen Katalysator vom theoretischen Erwartungswert beim Ansetzen der Imprägnierlösung dadurch zu berücksichtigen, daß man in einem Vorversuch für den speziellen Katalysator und die gewünschte Imprägnierdauer einen Korrekturfaktor ermittelt.

Es ist vorteilhaft, daß sich die durch Imprägnierung zusätzlich eingebrachte Molybdän- und/oder Wolframkomponente und ggf. Vanadinkomponente gleichmäßig im gesamten Katalysatorkörper verteilt.

Dieses wird durch Tauchzeiten von rund einer Minute oder kürzer erreicht. Längere Tauchzeiten dagegen führen meist zu einer ungleichmäßigen Verteilung.

Die Imprägnierung erfolgt an vorgetrockneten und erwärmten Waben, deren Temperatur 50 bis 200 °C, vorzugsweise 80 bis 120 °C, beträgt. Ein Erwärmen der Imprägnierlösung ist nicht erforderlich. Im Gegenteil ist es normalerweise zweckmäßig, die Lösung zu kühlen, um Konzentrationsänderungen durch Verdampfung oder durch temperaturabhängige Dichteänderung zu vermeiden.

Alternativ zum Vorwärmen der Wabe oder zusätzlich dazu kann ein Evakuieren derselben vor dem Eintauchen vorgesehen werden. Wasserstrahlvakuum genügt zu diesem Zweck.

Nach dem Imprägnieren läßt man abtropfen oder bläst gegebenenfalls die Kanäle mittels Preßluft aus. Anschließend wird über mehrere Stunden hinweg der imprägnierte Katalysator im Temperaturbereich von 20 bis 200 °C getrocknet. Die Trocknung kann erfolgen, indem man die Katalysatorkörper im Luftstrom entweder zuerst bei tiefer Temperatur, vorzugsweise bei 20 bis 50 °C für 4 bis 16 Stunden, und anschließend bei höherer Temperatur, vorzugsweise bei 80 bis 200 °C für 1 bis 8 Stunden oder indem man sie unmittelbar bei erhöhter Temperatur, vorzugsweise bei 50 bis 200 °C für 2 bis 12 Stunden, behandelt.

Abschließend wird der imprägnierte und anschließend getrocknete Katalysator bei Temperaturen zwischen 300 und 800 °C, vorzugsweise zwischen 400 bis 600 °C, calciniert.

Die Calcinierdauer beträgt 15 Minuten bis 12 Stunden, vorzugsweise 2 bis 8 Stunden. Trocknen und Calcinieren können auch in einem Arbeitsgang ausgeführt werden. Die angegebenen Zeiten für den Trocknungs- und Calcinierungsvorgang sind nicht ausschließliche Werte. Die Mindestzeiten bei vorgegebener Temperatur richten sich nach der gewünschten Restfeuchte bzw. der Dauer für die Umwandlung der Einsatzform der Imprägnierkomponente in die im Katalysator erwünschte Form, während die Obergrenze, abgesehen von der ökonomischen Unzweckmäßigkeit einer unnötig langen Behandlungsdauer, durch den Beginn einer thermischen Schädigung der Katalysatoren infolge Kristallitwachstums, Verlustes an BET-Oberfläche und Umwandlung von Anatas in Rutil bestimmt wird. Angesichts der Vielzahl verschiedener Katalysatoren, auf die die Erfindung anwendbar ist, muß im Einzelfall eine Ermittlung der optimalen Trocknungs- und Calcinierungstemperatur und -dauer erfolgen, was jedoch nur geringen experimentellen Aufwand erfordert.

In dem erfindungsgemäßen Verfahren imprägniert man den Katalysatorkörper mit einer gelösten Molybdän- und/oder Wolframverbindung und ggf. Vanadinverbindung, vorzugsweise mit einer Molybdänverbindung und besonders vorzugsweise mit einer Molybdän- und Vanadinverbindung. Gerade durch zusätzliches Einbringen einer kleinen Menge an Vanadin, z. B. in Form von Vanadinpentoxid, wird eine besonders gute Resistenz gegen Arsenvergiftung erzielt.

Die Lösung kann gleichzeitig noch weitere Komponenten enthalten, um diese ebenfalls in den Katalysator einzubringen oder um zu verhindern, daß ein solcher schon im Katalysator vorhandener Bestandteil beim Imprägnieren herausgelöst wird.

In der Imprägnierlösung kann die Molybdän- bzw. Wolfram- bzw. Vanadinverbindung in der Form vorliegen, in der sie im fertigen Katalysator' 8 gewünscht wird, oder in einer anderen Form, die bei der weiteren Verarbeitung wie Trocknen und Calcinieren in die gewünschte Form übergeht.

In Katalysatoren von besonderer technischer Bedeutung liegen die Molybdän-, Wolfram- und Vanadinverbindungen als $MoO_3$ bzw. $WO_3$ bzw. $V_2O_5$ vor. Um diese Oxide durch Imprägnieren einzubringen, ist es besonders vorteilhaft, Lösungen von Ammoniumdi- oder heptamolybdat bzw. von Ammoniummetawolframat bzw. von Ammoniummetavanadat bzw. deren Mischungen einzusetzen. Diese Verbindungen sind im technischen Maßstab erhältlich und in Wasser, dem anwendungstechnisch und wirtschaftlich günstigsten Lösungsmittel, sehr gut löslich, so daß auch hohe Gehalte im Katalysator in einem Arbeitsgang erzielbar sind. Im Falle schlechter löslicher Ausgangsstoffe muß der Katalysator gegebenenfalls die gesamte Abfolge von Arbeitsschritten mehrfach durchlaufen.

Um die Konzentration einer Molybdän-, Wolfram- oder Vanadinverbindung in der Imprägnierlösung für einen vorgegebenen Gehalt dieser Komponenten im fertigen Katalysator zu ermitteln, kann man wie folgt vorgehen:

Zuerst wird das Flüssigkeitsaufnahmevermögen eines Katalysators (1 Flüssigkeit/kg Katalysator) ermittelt, indem man ihn einige Stunden bei erhöhter Temperatur, beispielsweise 150 °C trocknet, wiegt, noch warm in vollentsalztes Wasser taucht und nach dem Abtropfen erneut wiegt.

Aus dem Flüssigkeitsaufnahmevermögen wird über die Formel 1

$$C_L = \frac{C_K}{\text{alpha}\ (1-C_K)} \qquad \text{(Formel 1)}$$

$C_L$ $\left[\frac{\text{kg } MoO_3 \text{ bzw. } WO_3 \text{ bzw. } V_2O_5}{\text{l Imprägnierlösung}}\right]$ Konzentration der Molybdän- bzw. Wolfram- bzw. Vanadinverbindung, ber. als $MoO_3$ bzw. $WO_3$ bzw. $V_2O_5$, in der Imprägnierlösung

$C_K$ $\left[\frac{\text{kg } MoO_3 \text{ bzw. } WO_3 \text{ bzw. } V_2O_5}{\text{kg gesamte Katalysatormasse}}\right]$ (zusätzlicher) Anteil der Molybdän- bzw. Wolfram- bzw. Vanadinverbindung ber. als $MoO_3$ bzw. $WO_3$ bzw. $V_2O_5$ im fertigen Katalysator

alpha $\left[\frac{\text{l Wasser}}{\text{kg Katalysatormasse vor Imprägnierung}}\right]$ Wasseraufnahme des Katalysators vor Imprägnierung

die Konzentration der Molybdän- bzw. Wolfram- bzw. Vanadinverbindung berechnet, die die Imprägnierlösung besitzen muß, um die gewünschte Menge der entsprechenden Komponente, ber. als $MoO_3$ bzw. $WO_3$ bzw. $V_2O_5$, in den Katalysator einzubringen.

Besonders gute Resistenzeigenschaften gegen Arsenvergiftung erhält man, wenn man durch Imprägnierung 1 bis 20 Gew.-%, vorzugsweise 5 bis 15 Gew.-%, einer Molybdänverbindung, berechnet als $MoO_3$ und bezogen auf die gesamte Masse des fertigen Katalysators, einbringt, d. h. daß der mit einer gelösten Molybdänverbindung imprägnierte Katalysator nach Calcinierung zusätzlich 1 bis 20 Gew.-%, vorzugsweise 5 bis 15 Gew.-%, Molybdän, ber. als $MoO_3$ und bezogen auf die gesamte Katalysatormasse, enthält. Man kann z. B. einen im wesentlichen nur aus Titandioxid bestehenden Katalysator imprägnieren. Eine bessere mechanische Festigkeit besitzen jedoch Katalysatoren, bei deren Herstellung schon eine Molybdän- und/oder Wolframverbindung, beispielsweise in den Kneter, zugegeben wurde, so daß vor Imprägnieren schon zumindest 2 bis 6 Gew.-% dieser Verbindungen, berechnet als $MoO_3$ bzw. $WO_3$, enthalten sind. In solchen Fällen führt schon ein Imprägnieren, vorzugsweise mit Molybdän, zu sehr guten Ergebnissen, mit dem der Gesamtgehalt im fertigen Katalysator auf 6 bis 12 Gew.-% dieser Verbindungen, ber. als $MoO_3$ bzw. $WO_3$, eingestellt wird. Auch ein Teil der gegebenenfalls enthaltenen Vanadinverbindung kann schon bei der Herstellung zugegeben werden.

Eine noch bessere Resistenz gegen Arsenvergiftung läßt sich dadurch erzielen, daß der mit einer gelösten Molybdän- und Vanadinverbindung imprägnierte Katalysator nach Calcinierung zusätzlich 5 bis 15 Gew.-% Molybdän und 0,1 bis 3,0 Gew.-%, vorzugsweise 0,3 bis 1,5 Gew.-%, Vanadin, ber. als $MoO_3$ und $V_2O_5$ und bezogen auf die gesamte Katalysatormasse, enthält.

Ein größerer zusätzlicher Gehalt an Vanadin ist zwar möglich, aber im Fall $SO_2$-haltiger Abgase nicht empfehlenswert, weil dieser dann gleichzeitig die meist unerwünschte Umwandlung von $SO_2$ in $SO_3$ in größerem Ausmaß bewirkt.

Das erfindungsgemäße Verfahren zur Herstellung eines gegen Arsenvergiftung resistenten Katalysators vermeidet Beschädigungen, die durch Komprimieren von im Porenvolumen eingeschlossener Luft hervorgerufen werden können, und liefert durch kurze Imprägnierzeiten Katalysatoren mit einem definierten Gehalt an den Imprägnierkomponenten Molybdän und/oder Wolfram und ggf. Vanadin, z. B. in Form ihrer Oxide

und/oder Sulfate, - die Abweichung vom Sollwert ist im allgemeinen kleiner als 10 % - sowie mit gleichförmiger Verteilung derselben über Länge und Querschnitt selbst ausgedehnter Katalysatorformen, z. B. Waben der Abmessungen 15 x 15 x 100 cm und 1,4 mm Stegdicke, wie mittels EDX (energy dispersive x-ray) nachgewiesen wurde.

Die Erfindung wird durch die folgenden Beispiele näher erläutert:

## Beispiel 1

Aus einem Wabenkatalysator K1, der 8 Gew.-% $WO_3$, 0,6 Gew.-% $V_2O_5$, einige wenige Prozente $Al_2O_3$ und $SiO_2$ als Beimischung und als Hauptkomponente $TiO_2$ enthält und gemäß dem Stand der Technik, wie oben ausführlich beschrieben, hergestellt wurde, wurde ein Abschnitt von 30 cm Länge mit 3 x 3 Kanälen mit 6 mm lichter Weite und 1,4 mm Wandstärke präpariert, bei 150 °C getrocknet und gewogen, anschließend noch warm in vollentsalztes Wasser getaucht und nach dem Abtropfen der Flüssigkeit erneut gewogen. Die getrocknete Wabe wog 0,0912 kg, die feuchte 0,1217 kg. Aus dem Gewichtsunterschied ergibt sich ein Wasseraufnahmevermögen alpha des Katalysators von 0,334 l/kg.

Für einen $MoO_3$-Gehalt im fertigen Katalysator von ca. 7,0 Gew.-% wird nach Formel (1) die erforderliche Molybdän-Konzentration, ger. als $MoO_3$, in der wäßrigen Ammoniumheptamolybdat-Imprägnierlösung zu 0,2253 kg $MoO_3$/l bestimmt und eingestellt. Die auf 100 °C erwärmte Wabe wird nun innerhalb einer Sekunde in die obige vorgekühlte Imprägnierlösung getaucht und eine Minute in derselben belassen. Nach Abtropfen wird die Wabe zuerst 6 Stunden bei 150 °C im Umluftstrom getrocknet und abschließend 5 Stunden im Luftstrom bei 450 °C calciniert.
Die calcinierte Wabe enthält gemäß Röntgenfluoreszenzanalyse 7,5 Gew.-% $MoO_3$.

## Beispiel 2

Ein Katalysator K4 (siehe auch Abb. 2 bis 5) mit einem Gehalt von 96 Gew.-% $TiO_2$, Rest Ton und Glasfasern, wird gemäß dem Stand der Technik, wie oben ausführlich beschrieben, in Wabenform hergestellt.

Wie in Beispiel 1 wird für einen gleichartigen Abschnitt das Wasseraufnahmevermögen alpha des Katalysators gemessen. Es beträgt 0,345 l/kg.

Für einen $MoO_3$-Gehalt im fertigen Katalysator von ca. 8,5 Gew.-% wird gemäß Formel (1) die entsprechende Molybdän-Konzentration, ger. als $MoO_3$, von 0,2693 kg $MoO_3$/l ermittelt und die Ammoniumheptamolybdat-Imprägnierlösung auf diesen Wert eingestellt.

Die Imprägnierung und thermische Nachbehandlung erfolgt wie in Beispiel 1. Die Röntgenfluoreszenzanalyse ergab für die calcinierte Wabe einen $MoO_3$-Gehalt von 9,1 Gew.-%.

## Beispiel 3

Ein Katalysator K5 (siehe auch Abb. 5) mit einem Gehalt von 86 Gew.-% $TiO_2$ und 7,7 Gew.-% $WO_3$, Rest Ton und Glasfasern, wird gemäß dem Stand der Technik, wie oben ausführlich beschrieben, in Wabenform hergestellt.

Wie in Beispiel 1 wird für einen gleichartigen Abschnitt das Wasseraufnahmevermögen alpha des Katalysators gemessen. Es beträgt 0,266 l/kg.

Für einen Gehalt von ca. 7,0 Gew.-% $MoO_3$ und ca. 0,7 Gew.-% $V_2O_5$ im fertigen Katalysator werden gemäß Formel (1) die entsprechende Molybdänkonzentration, ger. als $MoO_3$, von 0,283 kg $MoO_3$/l und Vanadinkonzentration, ger. als $V_2O_5$, von 0,027 kg $V_2O_5$/l ermittelt. Zur Imprägnierung mit Molybdän stellt man eine Ammoniumheptamolybdatlösung dieser Konzentration her, und zur Imprägnierung mit Vanadin wird eine wäßrige Vanadyloxalat-Lösung, bereitet aus $V_2O_5$ und Oxalsäure, auf diesen Wert eingestellt.

Die Imprägnierung wird in zwei Schritten durchgeführt, und zwar zuerst mit obiger Ammoniumheptamolybdat-Lösung gemäß Beispiel 1. Nach erfolgter Trocknung und Calcinierung gemäß Beispiel 1 wird anschließend die Wabe in gleicher Weise mit obiger Vanadyloxalat- Lösung imprägniert. Eine Calcinierung der Wabe nach der Vanadin-Imprägnierung ist nicht erforderlich, es wird lediglich gemäß Beispiel 1 getrocknet. Die Röntgenfluoreszenzanalyse ergab für den fertigen Katalysator einen $MoO_3$-Gehalt von 7,5 Gew.-% und einen $V_2O_5$-Gehalt von 0,65 Gew.-%.

Aktivitätstestung

Die Aktivitätstestung wurde an den in den Beispielen beschriebenen Wabenabschnitten von 30 cm Länge mit 3 x 3 Kanälen mit 6 mm lichter Kanalweite und 1,4 mm Wandstärke unter den folgenden Testbedingungen vorgenommen:

| | |
|---|---|
| Versuchstemperatur<br>Gasbelastung<br>Flächengeschwindigkeit AV | 400 °C<br>1 $Nm^3/h$<br>15 $Nm^3/m^2 \cdot h$ |
| Gaszusammensetzung | 100 mg $As/Nm^3$<br>1 000 Vol.-ppm $NO_x$ (> 95 % NO)<br>1 000 Vol.-ppm $NH_3$<br>1 000 Vol.-ppm $SO_2$<br>5 Vol.-% $O_2$<br>Rest $N_2$ |

Das Arsen wurde mit Hilfe eines temperaturgesteuerten Verdampfers in Form von Arsen-(III)-oxid in den Gasstrom gegeben. Die hohe Arsen-Konzentration, die das 100- bis 1 000fache typischer Werte in Kraftwerksabgasen betrug, gestattete schon nach kurzer Testdauer von 10 bis 50 Stunden Aussagen zum Katalysatorverhalten.

Gemessen wurde der $NO_x$-Umsatz am frischen Katalysator und nach verschiedenen Zeiten des Kontaktes des Katalysators mit dem arsenhaltigen Gasstrom. Aus den dezimalen $NO_x$-Umsätzen eta wurden über die Formel (2)

$K = - AV \cdot 1n (1-eta)$   Formel 2)

die Aktivitätsgrößen $K_o$ für frischen und $K_t$ für arsenbelasteten Katalysator zum Zeitpunkt t sowie die relativen Restaktivitäten a = $K_t/K_o$ errechnet. Die Ergebnisse sind in den Abb. 1, 2, 3, u. 5 zusammengefaßt, die die Abhängigkeit a = f (t) wiedergeben. Abb. 4 stellt die Restaktivität a als Funktion des durch Imprägnierung eingebrachten $MoO_3$-Gehaltes in Gew.-%, bezogen auf die gesamte Katalysatormasse, dar.

Abb. 1 zeigt die rasche Desaktivierung der Katalysatoren K1 bis K3 bis auf geringe Restaktivitätswerte von 0,25 bis 0,4 und die dagegen vergleichsweise hohe Restaktivität von 0,7 des erfindungsgemäß mit 7,5 Gew.-% $MoO_3$ imprägnierten Katalysators K1. Die Katalysatoren K1 bis K3 weisen die folgenden Gehalte an katalytisch aktiven Komponenten auf:

K1: 85 Gew.-% $TiO_2$, 8 Gew.-% $WO_3$ u. 0,6 Gew.-% $V_2O_5$, Rest Glasfasern

K2: 85,5 Gew.-% $TiO_2$ u. 7,9 Gew.-% $WO_3$, Rest Glasfasern

K3: 74,5 Gew.-% $TiO_2$, 12,5 Gew.-% $SiO_2$,7,4 Gew.-% $WO_3$ u. 0,7 Gew.-% $V_2O_5$, Rest Glasfasern

Die Katalysatoren K1 bis K3 wurden gemäß dem Stand der Technik, wie oben ausführlich beschrieben, hergestellt.

Abb. 2 zeigt die Desaktivierung eines Katalysators K4, der als katalytisch aktive Substanz lediglich Titandioxid enthält, bis auf einen Wert für a von 0,3, und im Vergleich dazu den nur geringen Aktivitätsabfall des Katalysators K4 nach Imprägnierung mit 9,1 Gew.-% $MoO_3$ auf a = 0,82.

Abb. 3 zeigt für den Katalysator K4 (siehe auch Beispiel 2) den Einfluß unterschiedlich hoher, durch Imprägnierung eingebrachter $MoO_3$-Gehalte, und zwar 2,85; 4,30; 5,90; 8,84; 9,09 und 13,56 Gew.-% $MoO_3$, auf die Resistenz gegen Arsenvergiftung.

Abb. 4 faßt die Ergebnisse aus Abb. 3 durch Auftragen der Restaktivität a am Testende gegen die durch Imprägnierung eingebrachte $MoO_3$-Konzentration zusammen. Man kann deutlich erkennen, daß das Maximum der Restaktivität bei einem $MoO_3$-Gehalt von ca. 9 Gew.-% liegt, d. h. für den Katalysator K4 wird mit diesem durch Imprägnierung eingebrachten $MoO_3$-Gehalt die optimale Resistenz gegen Arsenvergiftung erzielt.

Abb. 5 zeigt das Verhalten der folgenden Katalysatoren gegenüber Arsen:

| | |
|---|---|
| (1) Katalysator K5: nicht imprägniert | Chemische Zusammensetzung siehe Beispiel 3. Der Gehalt von 7,7 Gew.-% $WO_3$ wurde vor der Extrusion eingeknetet. Eine Imprägnierung ist nicht erfolgt. |
| (2) Katalysator K4: mit 7,7 Gew.-% $WO_3$ imprägniert | Chemische Zusammensetzung siehe Beispiel 2. Zusätzlich erfolgte eine Imprägnierung mit 7,7 Gew.-% $WO_3$ |
| (3) Katalysator K5: mit 9,3 Gew.-% $MoO_3$ imprägniert | Chemische Zusammensetzung siehe Beispiel 3. Zusätzlich erfolgte eine Imprägnierung mit 9,3 Gew.-% $MoO_3$ |
| (4) Katalysator K5: mit 7,5 Gew.-% $MoO_3$ und 0,6 Gew.-% $V_2O_5$ imprägniert | Chemische Zusammensetzung siehe Beispiel 3. Zusätzlich erfolgte eine Imprägnierung mit 7,5 Gew.-% $MoO_3$ und 0,6 Gew.,-% $V_2O_5$. |

Es wird deutlich,

- daß eine Imprägnierung des Katalysators K4 mit einer Wolframkomponente (siehe Kurve (2)) im Vergleich zur gleichen vorher eingekneteten Menge an $WO_3$ gemäß Katalysator K5 (siehe Kurve (1)) die Resistenzeigenschaften von Titandioxid gegen Arsenvergiftung ebenfalls verbessert, wenn auch weniger wirkungsvoll als mit einer Molybdänkomponente (vgl. Abb. 3).
- daß eine zusätzliche Imprägnierung mit einter Molybdänkomponente (siehe Kurve (3)) einen schon $WO_3$ enthaltenden nicht imprägnierten Katalysator K5 (siehe Kurve (1)) deutlich verbessert.
- daß eine noch zusätzliche Imprägnierung eines Katalysators K5, der schon mit 7,5 Gew.-% $MoO_3$ imprägniert worden ist, mit einer kleinen Menge einer Vanadinkomponente zu einer weiteren Verbesserung führt (siehe Kurve (4)). Dieses Verhalten überrascht besonders, da in weiteren Experimenten festgestellt wurde, daß ein lediglich mit 0,5 Gew.-% $V_2O_5$ imprägnierter Katalysator K4 noch stärker desaktiviert wird als K4 selbst ($a = 0,27$ gegenüber $a = 0,3$). Eine nach dem erfindungsgemäßen Verfahren vorgenommene Imprägnierung nur mit einer Vanadinkomponente bleibt also erfolglos.

## Ansprüche

1. Verfahren zur Herstellung eines gegen Arsenvergiftung resistenten Katalysators zur Entfernung von Stickoxiden aus Abgasen auf Basis Titanoxid, der gegebenenfalls noch weitere katalytisch aktive Komponenten und/oder Bindemittel enthält,
dadurch gekennzeichnet,
daß man den Katalysator nach Formung und Calcinierung zusätzlich mit einer gelösten Molybdän- und/oder Wolframverbindung und ggf. Vanadinverbindung imprägniert.

2. Verfahren nach Anspruch 1,
dadurch gekennzeichnet,
daß die Imprägnierung in einem Schritt mit einer Lösung einer Molybdän- und/oder Wolframverbindung und gegebenenfalls Vanadinverbindung erfolgt.

3. Verfahren nach Anspruch 1,
dadurch gekennzeichnet,
daß die Imprägnierung nacheinander mit einer Lösung einer Molybdänverbindung und/oder einer Lösung einer Wolframverbindung und gegebenenfalls einer Lösung einer Vanadinverbindung erfolgt.

4. Verfahren nach den Ansprüchen 1 bis 3,
dadurch gekennzeichnet,
daß die weiteren katalytisch aktiven Komponenten Molybdän- und/oder Wolframverbindungen und/oder Vanadinverbindungen sind.

5. Verfahren nach den Ansprüchen 1 bis 4,
dadurch gekennzeichnet,
daß der mit einer gelösten Molybdänverbindung imprägnierte Katalysator nach Calcinierung zusätzlich 1 bis 20 Gew.-% Molybdän, ber. als $MoO_3$ und bezogen auf die gesamte Katalysatormasse, enthält.

6. Verfahren nach den Ansprüchen 1 bis 4,
dadurch gekennzeichnet,
daß der mit einer gelösten Molybdän- und Vanadinverbindung imprägnierte Katalysator nach Calcinierung zusätzlich 5 bis 15 Gew.-% Molybdän und 0,1 bis 3,0 Gew.-% Vanadin, ber. als $MoO_3$ und $V_2O_5$ und bezogen auf die gesamte Katalysatormasse, enthält.

7. Verfahren nach den Ansprüchen 1 bis 6,
dadurch gekennzeichnet,
daß sich die durch Imprägnierung zusätzlich eingebrachte Molybdän-und/oder Wolframkomponente und ggf. Vanadinkomponente gleichmäßig im gesamten Katalysatorkörper verteilt.

8. Verfahren nach den Ansprüchen 1 bis 7,
dadurch gekennzeichnet,
daß der imprägnierte Katalysator im Temperaturbereich von 20 bis 200 °C getrocknet wird.

9. Verfahren nach den Ansprüchen 1 bis 8,
dadurch gekennzeichnet,
daß der imprägnierte und anschließend getrocknete Katalysator bei Temperaturen zwischen 300 und 800 °C calciniert wird.

10. Verfahren nach Anspruch 9,
dadurch gekennzeichnet,
daß der imprägnierte und anschließend getrocknete Katalysator bei Temperaturen zwischen 400 bis 600 °C calciniert wird.

11. Verfahren nach den Ansprüchen 1 bis 10,
dadurch gekennzeichnet,
daß der zu imprägnierende Katalysator ein wabenförmiger Katalysator ist.

12. Verfahren nach den Ansprüchen 1 bis 10,
dadurch gekennzeichnet,
daß der zu imprägnierende Katalysator ein Plattenkatalysator ist.

O.Z. 4277

Abb. 1

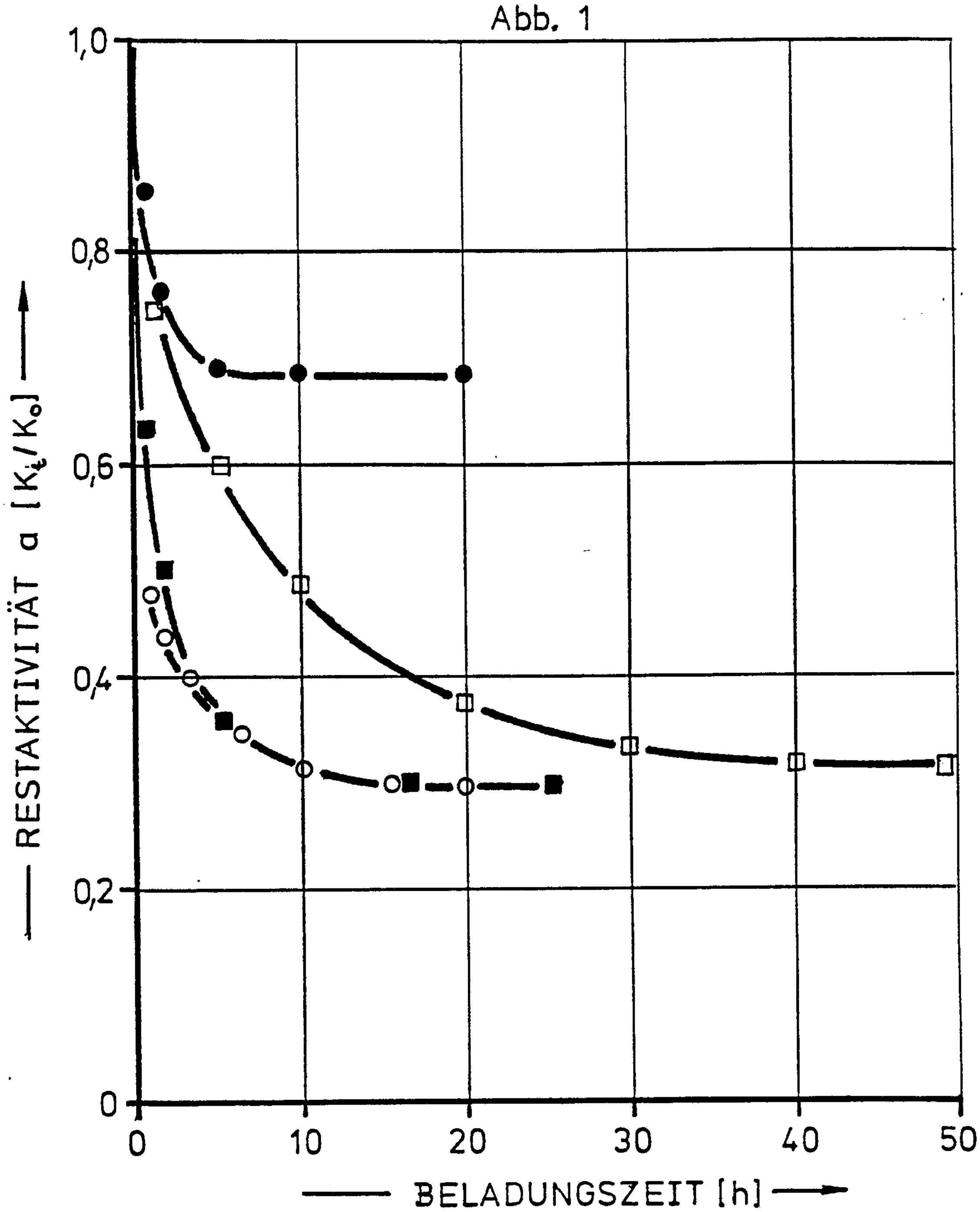


● ● Katalysator K 1 + 7,5 Gew.-% $MoO_3$ erfindungsgemäß imprägniert

○ ○ Katalysator K 1 ( $TiO_2$-$WO_3$-$V_2O_5$ )

■ ■ Katalysator K 2 ( $TiO_2$-$WO_3$ )

□ □ Katalysator K 3 ( $TiO_2$-$SiO_2$-$WO_3$-$V_2O_5$ )

O.Z. 4277

Abb. 2

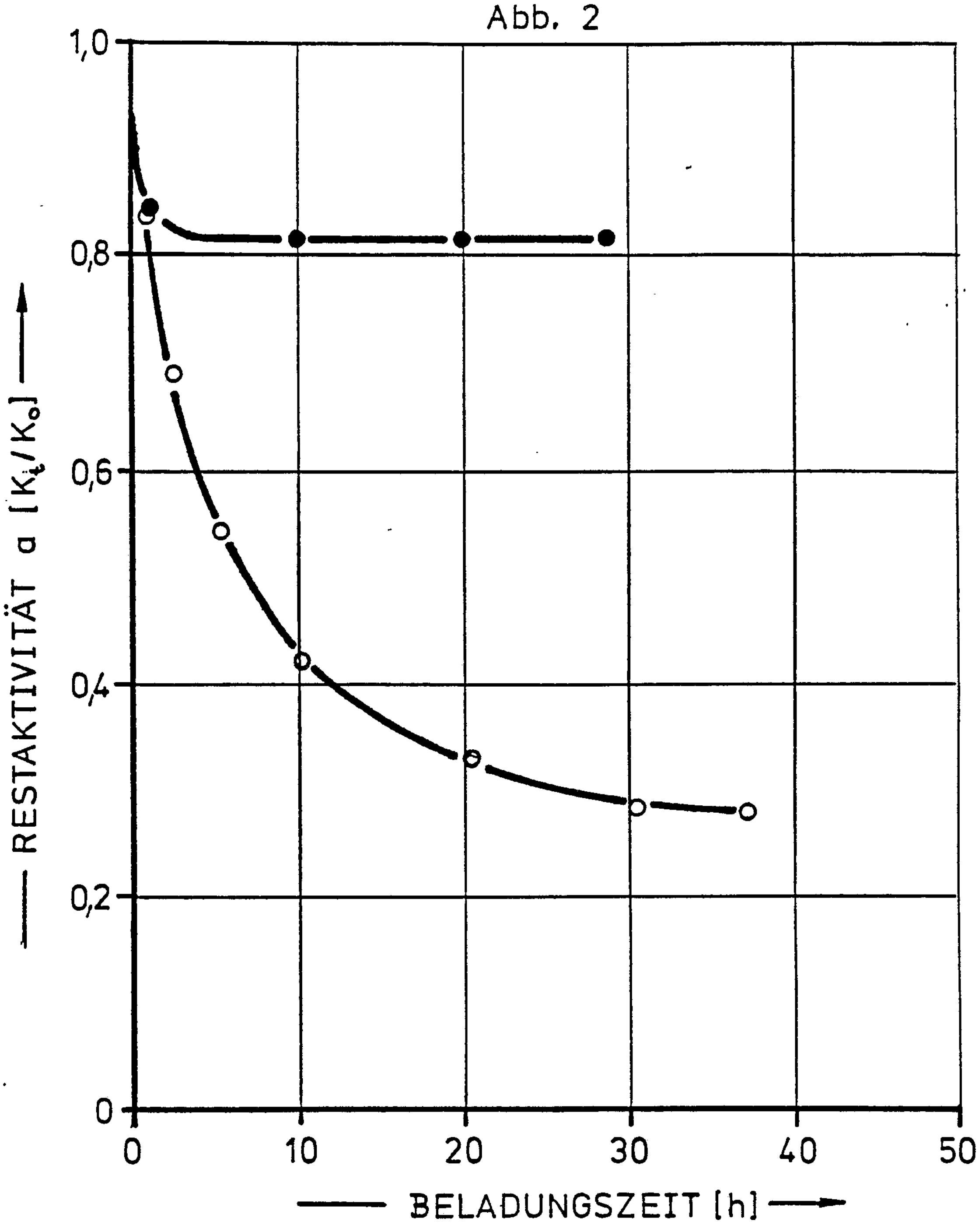


● ● Katalysator K 4 + 9,1 Gew.-% $MoO_3$ erfindungsgemäß imprägniert

○ ○ Katalysator K 4 ( $TiO_2$ )

O.Z. 4277

Abb. 3

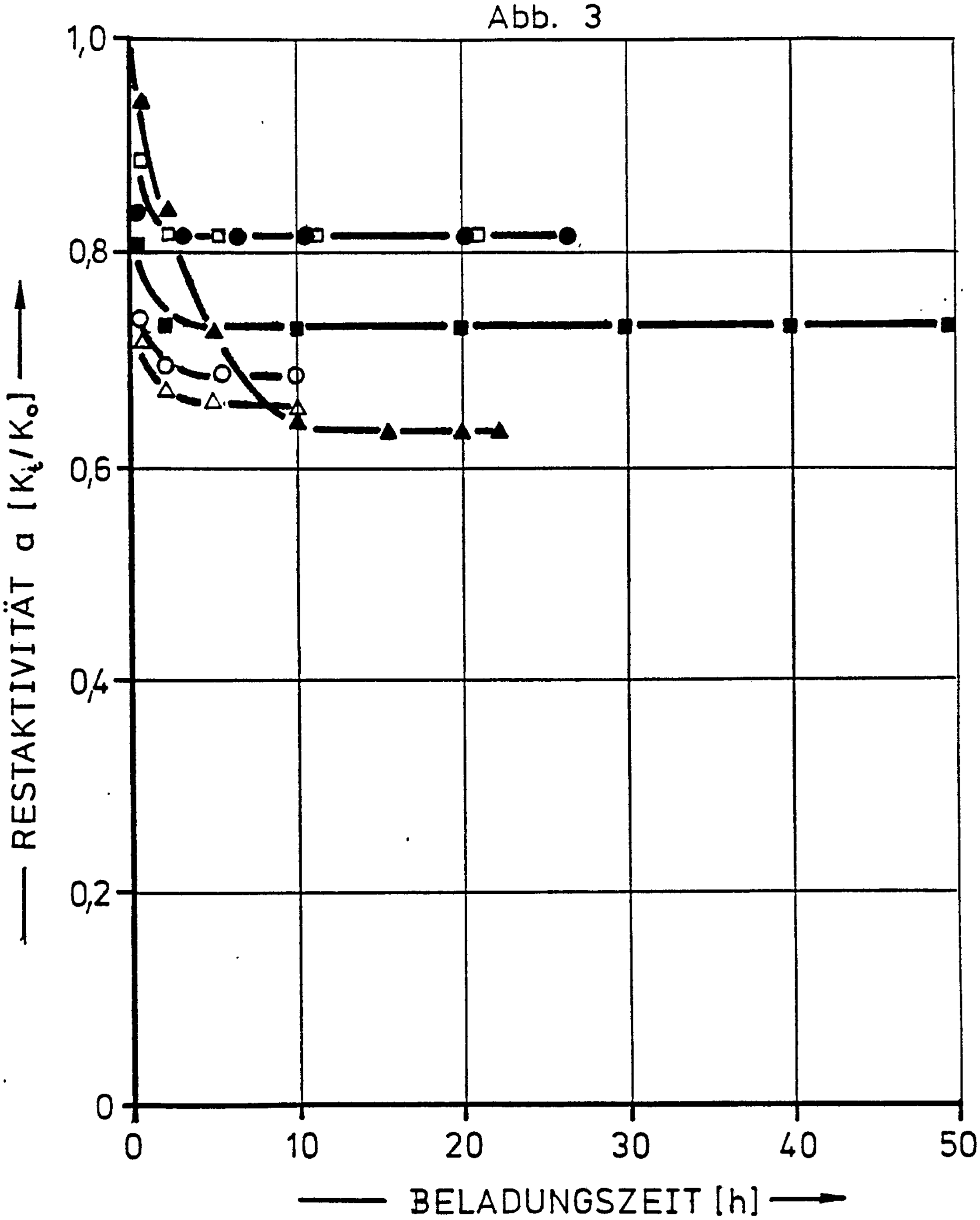


▲ ▲ Katalysator K 4 + 2,85 Gew.-% $MoO_3$

△ △ Katalysator K 4 + 4,30 Gew.-% $MoO_3$

■ ■ Katalysator K 4 + 5,90 Gew.-% $MoO_3$

□ □ Katalysator K 4 + 8,84 Gew.-% $MoO_3$

● ● Katalysator K 4 + 9,09 Gew.-% $MoO_3$

○ ○ Katalysator K 4 + 13,56 Gew.-% $MoO_3$

O.Z. 4277

Abb.4

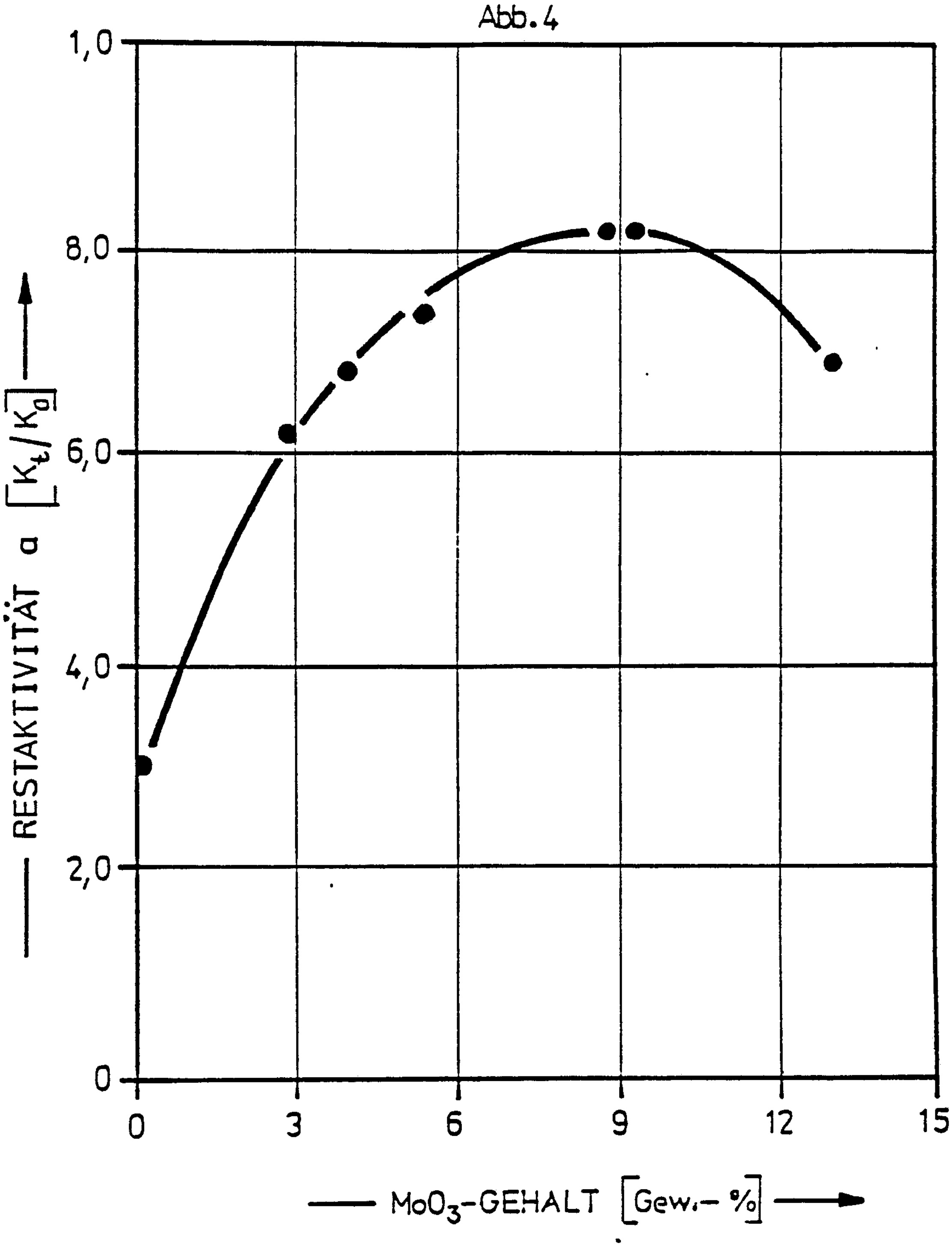
1,0
8,0
6,0
4,0
2,0
0
0
3
6
9
12
15
RESTAKTIVITÄT a [$K_t/K_0$]
$MoO_3$-GEHALT [Gew.-%]

O.Z. 4277

Abb. 5

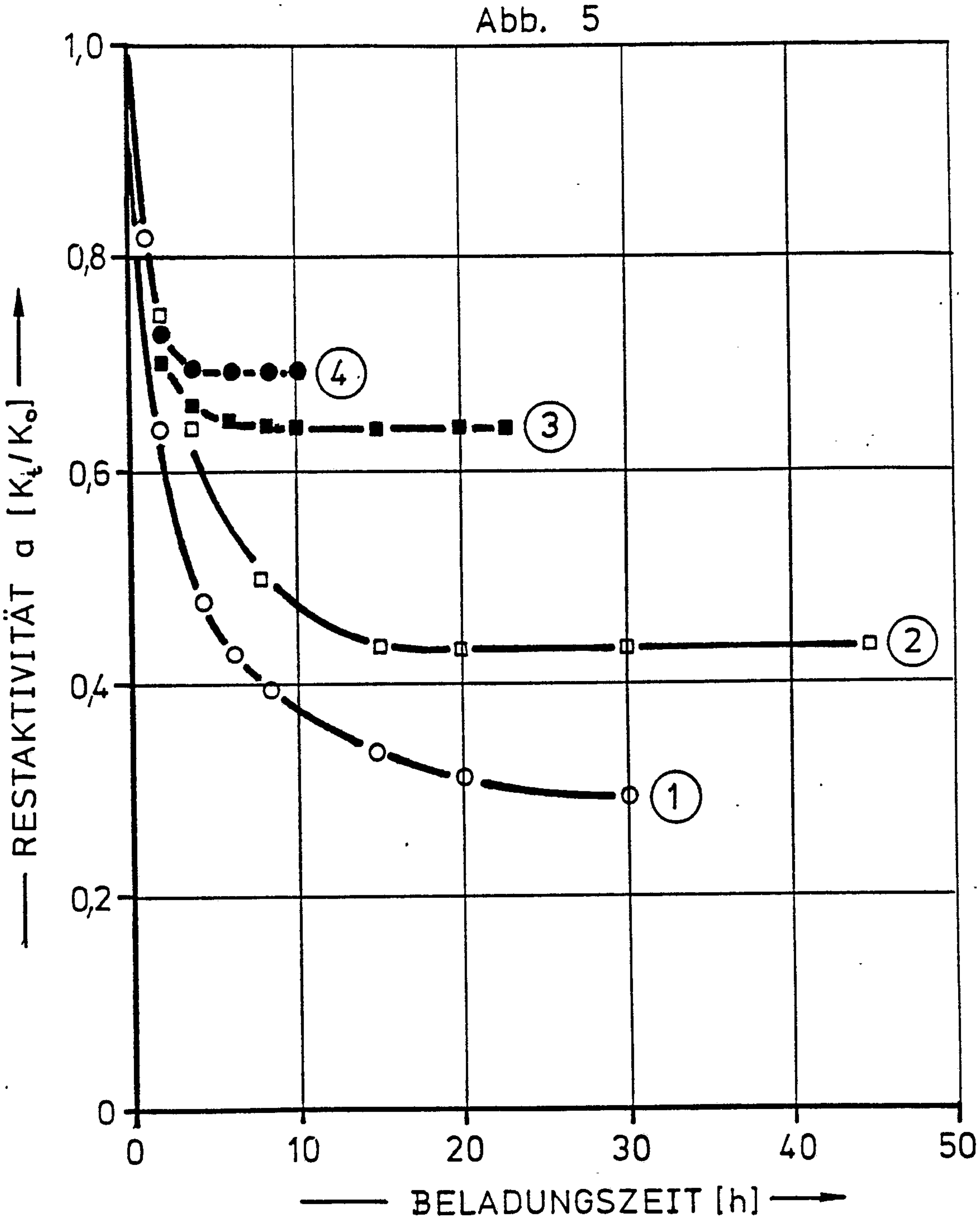


○ ○ Katalysator K 5 ( $TiO_2$+7,7 Gew.-% $WO_3$,vor Extrusion eingeknetet,nicht imprägniert )

□ □ Katalysator K 4 + 7,7 Gew.-% $WO_3$ imprägniert

■ ■ Katalysator K 5 + 9,3 Gew.-% $MoO_3$ imprägniert

● ● Katalysator K 5 + 7,5 Gew.-% $MoO_3$ imprägniert + 0,65 Gew.-% $V_2O_5$ imprägniert